Europäisches Patentamt

European Patent Office

Office européen des brevets

(11) Veröffentlichungsnummer: **0 203 433**
A2

(12) **EUROPÄISCHE PATENTANMELDUNG**

(21) Anmeldenummer: **86106335.2**

(22) Anmeldetag: **09.05.86**

(51) Int. Cl.⁴: **F 16 N 3/12**

(30) Priorität: **11.05.85 DE 3517123**

(43) Veröffentlichungstag der Anmeldung: **03.12.86**
**Patentblatt 86/49**

(84) Benannte Vertragsstaaten: **BE CH FR GB IT LI NL SE**

(71) Anmelder: **MATO Maschinen- und Metallwarenfabrik
Curt Matthaei GmbH & Co KG, Bieberer
Strasse 215-217, D-6050 Offenbach am Main (DE)**

(72) Erfinder: **Der Erfinder hat auf seine Nennung verzichtet**

(74) Vertreter: **Schieferdecker, Lutz, Dipl.-Ing. et al,
Patentanwälte Dr.-Ing. P.K. Holzhäuser Dipl.-Met. W.
Goldbach Dipl.-Ing.Ing. L. Schieferdecker
Herrnstrasse 37, D-6050 Offenbach am Main (DE)**

(54) **Handhebel-Fettpresse.**

(57) Die Erfindung betrifft eine Handhebel-Fettpresse mit einem einen Niederdruckkolben aufweisenden Fettbehälter sowie mit einem Hochdruckkolben in einer Bohrung eines Hochdruckteiles, das an einem auf den Fettbehälter aufschraubbaren Deckel angeordnet ist, über eine Bohrung mit dem Inneren des Fettbehälters in Verbindung steht und einen quer zum Hochdruckkolben stehenden Auslaßstutzen mit einer Bohrung und einem Ventil aufweist, und wobei ein Handhebel am Hochruckkolben und an einer Schwenklasche angelenkt ist, die wiederum am Hochdruckteil gelagert ist.

Der Kern der Erfindung besteht darin, daß der Hochdruckteil und der Auslaßstutzen in einstückiger Ausbildung ein L-förmig gebogenes und gepreßtes sowie mit Bohrungen versehenes Rundmaterialstück aus Stahl ist.

ACTORUM AG

- 1 -

MATO Maschinen- und Metallwarenfabrik Curt Matthaei
GmbH & Co. KG

Bieberer Straße 215-217
6o5o Offenbach

-------------------------------------------------------

" Handhebel-Fettpresse "

-------------------------------------------------------

Die Erfindung betrifft eine Handhebel-Fettpresse mit
einem einen Niederdruckkolben aufweisenden Fettbehälter
sowie mit einem Hochdruckkolben in einer Bohrung eines
Hochdruckteiles, das an einem auf den Fettbehälter aufschraubbaren Deckel angeordnet ist, über eine Bohrung
mit dem Inneren des Fettbehälters in Verbindung steht
und einen quer zum Hochdruckkolben stehenden Auslaßstutzen
mit einer Bohrung und einem Ventil aufweist, und wobei
ein Handhebel am Hochdruckkolben und an einer Schwenklasche angelenkt ist, die wiederum am Hochdruckteil gelagert ist.

Handhebel-Fettpressen der genannten Art sind z.B. aus
den beiden US-PS 3 627 178 und 4 o77 494 bekannt und
gelangen in großen Stückzahlen zum Einsatz. Sie werden
nach Abschrauben des Deckels gefüllt und weisen einen
Niederdruckkolben auf, der das Fett in den Hochdruckteil
drückt. Mit Hilfe des am Hochdruckteil gelagerten und
den Hochdruckkolben verschiebenden Handhebels wird das
Fett aus dem Hochdruckteil herausgepreßt, wobei aufgrund des am Handhebel wirksamen Übersetzungsverhältnisses sehr hohe Drücke erzielbar sind.

Der Hochdruckteil besteht bei der in der US-PS 3 627178 dargestellten und beschriebenen Handhebel-Fettpresse aus einem Rohrstück, dem Auslaßstutzen und einem Verschlußstopfen. Der Auslaßstutzen weist eine in Verlängerung des Rohrstückes liegende, an ihrem einen Ende mit Hilfe des Verschlußstopfens geschlossene Durchgangsbohrung und quer dazu eine Auslaßbohrung auf. Die Befestigung des Auslaßstutzens erfolgt an der einen Stirnfläche des Rohrstückes mit Hilfe einer umlaufenden Schweißnaht.

Bei der Handhebel-Fettpresse nach der US-PS 4 077 494 besteht der Hochdruckteil aus einem Zylinder und einem Auslaßstutzen, der den Zylinder in der Nähe seines Bodens durchgreift. Sowohl der Zylinder als auch der Auslaßstutzen weisen zusätzlich zu ihren Längsbohrungen auch Querbohrungen auf, damit einerseits der Zylinder den Auslaßstutzen aufnehmen kann und andererseits das unter hohem Druck stehende Fett in den Auslaßstutzen eintreten kann. Die Befestigung des Auslaßstutzens am Zylinder erfolgt durch nietartiges Aufweiten seines einen Endes.

In dem Hochdruckteil und somit auch an der Verbindungsstelle zwischen dem Auslaßstutzen und dem Rohrstück bzw. dem Zylinder treten während des Betriebes Drücke bis 400 bar auf. Die Prüfung der Funktionssicherheit erfolgt sogar bei einem Druck von 800 bar. Die Her-

- 3 -

stellung des Hochdruckteiles muß daher mit großer Sorgfalt erfolgen, da jede Fehlerstelle an der Schweißnaht bzw. an dem nietartigen Endstück sofort zu Undichtigkeiten und somit zur völligen Unbrauchbarkeit des Gerätes führt.

Ferner sind Handhebel-Fettpressen mit einem im Querschnitt vierecken, eine zylindrische Bohrung aufweisenden Hochdruckteil bekannt, an dem ein als Auslaßstutzen dienendes Rohrstück entweder angeschweißt oder mittels einer Schraubverbindung befestigt ist. Auch hier ist die Schweißnaht und insbesondere die Schraubverbindung wegen der hohen Drücke nicht unproblematisch, weil im Bereich der Anschlußstelle für den Auslaßstutzen nur wenig Platz für die erforderlichen Gewindegänge vorhanden ist.

Sowohl bei der zuletzt genannten Handhebel-Fettpresse als auch bei der aus der US-PS 3 627 178 bekannten Handhebel-Fettpresse ist die den Handhebel lagernde Schwenklasche am Hochdruckteil mit Hilfe eines Niet befestigt. Die Bohrung für den Niet befindet sich entweder in dem Auslaßstutzen oder in dem Hochdruckteil.

Schließlich ist aus der DE-OS 14 75 542 eine Handhebel- Fettpresse bekannt, deren Hochdruckteil einschließlich Auslaßstutzen und Deckelelement aus einem einzigen Stück bestehen. Als Werkstoff können Grauguß, Aluminiumdruck- guß, Zinkdruckguß oder Kunststoff dienen. Allerdings ist in keinem dieser Fälle die wünschenswerte Haltbarkeit oder Präzision gewährleistet, die bei einem Teil aus Stahl erzielbar ist.

- 4 -

Der Erfindung liegt gegenüber dem insgesamt genannten Stand der Technik die Aufgabe zugrunde, Maßnahmen vorzusehen, mit deren Hilfe dich die Fertigung des Hochdruckteiles vereinfachen läßt und gleichzeitig ein Höchstmaß an Betriebssicherheit in Anbetracht der auftretenden Drücke erzielbar ist.

Zur Lösung dieser Aufgabe sieht die Erfindung vor, daß der Hochdruckteil und der Auslaßstutzen in einstückiger Ausbildung ein L-förmig gebogenes und gepresstes sowie mit Bohrungen versehenes Rundmaterialstück aus Stahl ist.

Durch die Einstückigkeit und die Verwendung von Stahl entfallen alle bisher bestehenden Probleme. Undichte und zum Bersten neigende Stelle sind nicht mehr vorhanden. Ferner läßt sich die gewünschte Präzision und Haltbarkeit erreichen. Die Nachteile der bekannten, aus mehreren Stücken bestehenden Hochdruckteile und die Nachteile der bekannten einstückigen Hochdruckteile entfallen daher.

Als Ausgangsmaterial dient vorzugsweise Walzdraht, der in Stücke geschnitten, L-förmig gebogen und derart gepresst wird, daß er in ausreichendem Maße Auflageflächen aufweist, die seine Befestigung am Deckel gestatten. Ferner lassen sich die Bohrungen für den Hochdruckkolben im langen Schenkel und für den Auslaß im kurzen Schenkel problemlos vorsehen, wobei die Bohrung für den Hochdruckkolben erst nach der Befestigung am Deckel fertiggestellt wird.

- 5 -

Die Herstellung eines Hochdruckteiles aus einem Walzdrahtstück ist im Ergebnis kostengünstig und bringt
ein höheres Maß an Sicherheit mit sich als die bekannten
Hochdruckteile.

Die Herstellungskosten lassen sich schließlich nochmals
senken, wenn in Weiterbildung der Erfindung der Hochdruckteil an seinem auslaßseitigen Ende außen ein Schneidenlager für die Schwenklasche aufweist. Die Schwenklasche ist daher nicht mehr auf einer Achse bzw. einem
Niet gelagert, sondern mit Hilfe eines Steges, der eine
den Auslaßstutzen übergreifende Ausnehmung begrenzt und
in einer das Schneidenlager bildenden Lagerkerbe liegt.

Weitere Merkmale der Erfindung gehen aus der Beschreibung und den Ansprüchen im Zusammenhang mit der Zeichnung hervor.

Die Erfindung wird nachstehend anhand von Ausführungsbeispielen, die in der Zeichnung dargestellt sind, näher
beschrieben. Dabei zeigen:

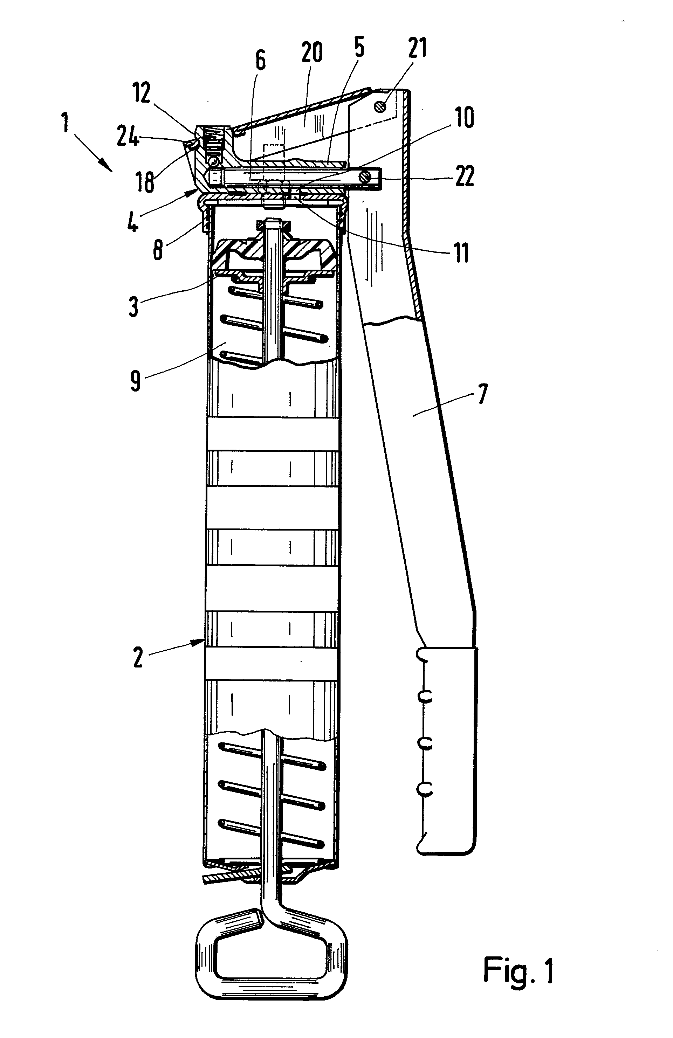

Fig. 1 : eine Handhebel-Fettpresse zum Teil im Schnitt;
Fig. 2 : einen Längsschnitt durch den Hochdruckteil
in größerem Maßstab;
Fig. 3 : einen Schnitt wie in Fig. 2 von einem abgewandelten Ausführungsbeispiel und
Fig. 4 : eine Draufsicht auf eine Einzelheit gemäß
Fig. 3.

Eine Handhebel-Fettpresse 1 umfaßt einen Fettbehälter 2
mit einem Niederdruckkolben 3 und einen Hochdruckteil 4
mit einer Bohrung 5, in der ein Hochdruckkolben 6 mit

0203433

Hilfe eines Handhebels 7 axial verschiebbar ist. Der Hochdruckteil 4 ist an einem auf den Fettbehälter 2 aufschraubbaren Deckel 8 angeordnet und seine Bohrung 5 steht mit dem Inneren 9 des Fettbehälters 2 über eine Öffnung 10 und eine Öffnung 11 im Deckel 8 in Verbindung. Die Bohrung 5 ist eine Sackbohrung.

Der Hochdruckteil 4 umfasst ferner einen quer zum Hochdruckkolben 6 stehenden Auslaßstutzen 12 mit einer abgesetzten Bohrung 13 und einem Ventil 14 mit einer Ventilfeder 15.

Der Hochdruckteil 4 und sein Auslaßstutzen 12 bestehen in einstückiger Ausbildung aus einem L-förmig gebogenen sowie gepressten und mit der Öffnung 10 bzw. den Bohrungen 5 und 13 versehenen Rundmaterialstück 16. Dieses Rundmaterialstück 16 besteht aus Stahl und ist vorzugsweise ein Walzdrahtstück, das zur Herstellung des Hochdruckteiles 4 zunächst in Stücke geeigneter Länge geschnitten, L-förmig gebogen und sodann durch Drücken bzw. Pressen mit einer ebenen Bodenfläche 17 versehen wird. Der Auslaßstutzen 12 wird außen ballig gedrückt und erhält ebenfalls durch Drücken eine Lagerkerbe 18 und zweckmäßigerweise eine Materialverlagerung 19 beim Eindrücken der Öffnung 10. Ferner werden die Bohrungen 5 und 13 eingebracht, wobei die Bohrung 5 ihr Fertigmaß erst nach Befestigung des Hochdruckteiles 4 am Deckel 8 erhält.

Der Handhebel 7 ist an dem Hochdruckkolben 6 sowie an einer Schwenklasche 20 mit Hilfe von Bolzen 21 bzw. 22 angelenkt. Zur Lagerung der Schwenklasche 20 am Hochdruckteil 4 dient ein Schneidenlager. Die Schwenklasche 20 weist hierzu eine den Auslaßstutzen 12 übergreifende Ausnehmung 23 und einen in der Lagerkerbe 18 außen an dem Hochdruckteil 4 bzw. dem Auslaßstutzen 12 liegenden Steg 24 auf. Dieser Steg 24 besteht zweckmäßigerweise aus einer doppelten Materiallage der im Querschnitt z.B. U-förmigen Schwenklasche 2o.

Die der Lagerkerbe 18 gegenüberliegende Oberfläche des Auslaßstutzens 12 ist vorzugsweise leicht ballig, damit sich der dort anliegende Rand 26 der Ausnehmung 23 beim Herausziehen des Hochdruckkolbens 6 aus der Bohrung 5 möglichst reibungsfrei abstützen kann. Eine geringe Reibung ist schließlich auch bei der Schneidenlagerung zwischen dem Steg 24 und der Lagerkerbe 18 gegeben.

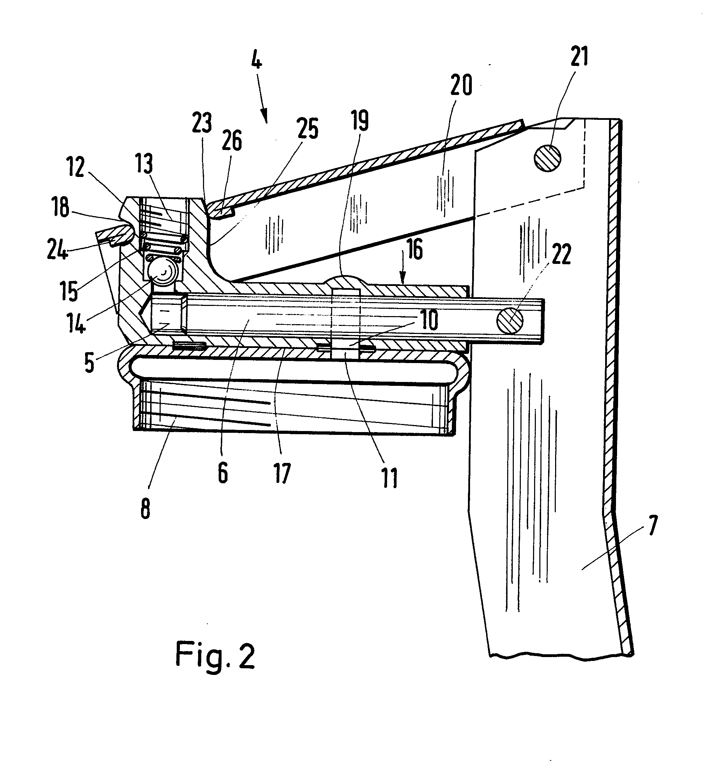

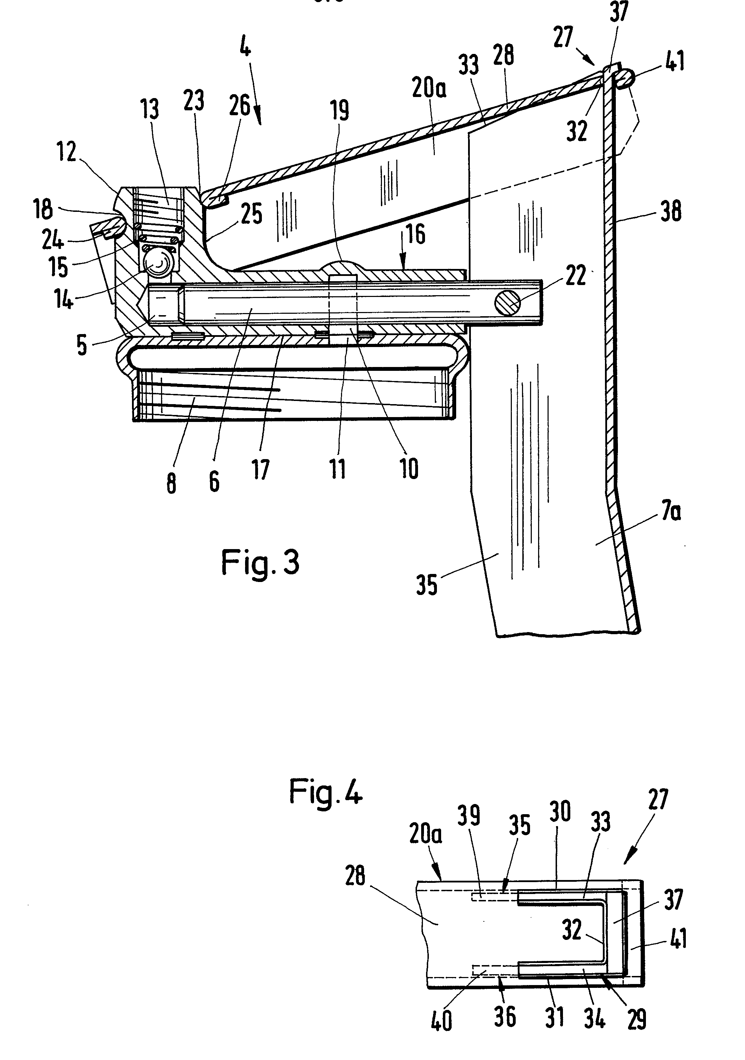

Das in den Fig. 3 und 4 dargestellte Ausführungsbeispiel unterscheidet sich von der zuerst beschriebenen Ausführungsform nur dadurch, daß der den Handhebel 7 mit der Schwenklasche 2o verbindende Bolzen 21 gemäß Fig. 2 durch ein weiteres Schneidenlager 27 ersetzt ist. Hierzu weist der Steg 28 der Schwenklasche 2o a eine U-förmige Ausnehmung 29 auf, in deren Schlitzen 3o, 31 bzw. 32 die freien Ränder 33 und 34 der Schenkel 35, 36 bzw. der abgewinkelte Rand 37 des Steges 38 des im Querschnitt ebenfalls U-förmigen Handhebels 7a liegen. Die freien Ränder 33, 34 der Schenkel 35, 36 verlaufen ferner leicht schräg bzw. spitzwinklig zum Steg 28 der Schwenklasche 2o a und greifen mit Randstücken 39, 4o bis unter den Steg 28. Dadurch sind im Bereich der Schenkel 35, 36 Abstützflächen geschaffen. Ferner liegt der durch den Schlitz 32 greifende, abgewinkelte Rand 37 des Handhebels 7a auf einem umgebördelten Randstück 41 des Steges 28 der Schwenklasche 2o a auf. Die Schwenklasche 2oa und der Handhebel 7a sind daher in Verbindung mit dem Bolzen 22 unlösbar mit-

- 8 -

einander verbunden, wobei der in dem Schlitz 32 liegende
Teil des auswärts abgewinkelten Randes 37 das eigentliche
Schneidenlager 27 bildet.

Patentansprüche:

1. Handhebel-Fettpresse mit einem einen Niederdruckkolben aufweisenden Fettbehälter sowie mit einem Hochdruckkolben in einer Bohrung eines Hochdruckteiles, der an einem auf den Fettbehälter aufschraubbaren Deckel angeordnet ist, über eine Bohrung mit dem Inneren des Fettbehälters in Verbindung steht und einen quer zum Hochdruckkolben stehenden Auslaßstutzen mit einer Bohrung und einem Ventil aufweist, und wobei ferner ein Handhebel am Hochdruckkolben und an einer Schwenklasche angeordnet ist, die wiederum am Hochdruckteil gelagert ist, dadurch gekennzeichnet, daß der Hochdruckteil (4) und der Auslaßstutzen (12) in einstückiger Ausbildung ein L-förmiges gebogenes und gepreßtes und mit einer Öffnung (10) sowie den Bohrungen (5 und 13) versehenes Rundmaterialstück (16) aus Stahl ist.

2. Handhebel-Fettpresse nach Anspruch 1, dadurch gekennzeichnet, daß das Rundmaterialstück (16) ein Walzdrahtstück ist.

3. Handhebel-Fettpresse nach Anspruch 1 und 2, dadurch gekennzeichnet, daß die Bohrung (5) eine Sackbohrung ist.

4. Handhebel-Fettpresse nach Anspruch 1, dadurch gekennzeichnet, daß der Hochdruckteil (4) an seinem auslaßseitigen Ende außen eine Lagerkerbe (18) für die Schwenklasche (2o) aufweist.

5. Handhebel-Fettpresse nach Anspruch 1 - 4, dadurch gekenn-zeichnet, daß die Schwenklasche (2o) eine den Auslaß-stutzen (12) umgreifende Ausnehmung (13) und einen in der Lagerkerbe (18) außen am Hochdruckteil (4) liegen-den Steg (24) aufweist.

- 10 -

6. Handhebel-Fettpresse nach Anspruch 1 - 5, dadurch gekennzeichnet, daß der Steg (24) aus einer doppelten Materiallage besteht.

7. Handhebel-Fettpresse nach Anspruch 1, dadurch gekennzeichnet, daß der im Hochdruckteil (4) verschiebbare Hochdruckkolben (6) mittels eines Bolzens (22) mit dem Handhebel (7a) und daß der Handhebel (7a) mittels eines Schneidenlagers (27) mit der Schwenklasche (2o a) verschwenkbar verbunden ist.

8. Verfahren zum Herstellen eines einen Auslass - stutzen (12) aufweisenden Hochdruckteiles (4) für eine Fettpresse gemäss Anspruch 1, dadurch gekennzeichnet, dass ein Rundmaterialstück aus Stahl zunächst in Länge geschnitten, sodann L-förmig gebogen wird, dass ebene Auflageflächen (17) in ausreichendem Masse an das Rundmaterialstück angedrückt werden, und dass eine Öffnung (10) mit Bohrungen (5) und (13) in das Rundmaterialstück eingebracht werden.

9. Verfahren nach Anspruch 8, dadurch gekennzeichnet, dass ein Walzdrahtstück als Rundmaterial verwendet wird.

10. Verfahren nach Anspruch 8, dadurch gekennzeichnet, dass im Bereich des Auslassstutzens (12) durch Drücken eine Lagerkerbe (18) und eine ballige Abstützfläche (25) für eine Schwenklasche (20) erzeugt werden.

11. Verfahren nach Anspruch 8 - 10, dadurch gekennzeichnet, dass eine Materialverlagerung (19) zur Erweiterung der den Hochdruckkolben (6) aufnehmenden Bohrung (5) im Bereich der Öffnung (10) durch Drücken erfolgt.

12. Verfahren nach Anspruch 8 - 11, dadurch gekennzeichnet, dass die Bohrung (5) ihr Fertigmass erst nach Befestigung des Hochdruckteiles (4) an einem Deckel (8) erhält.

0203433

Fig. 1

0203433

Fig. 2

Fig. 3

Fig. 4